# EUROPÄISCHE PATENTSCHRIFT

(11) **EP 3 981 653 B1**
(45) Veröffentlichungstag und Bekanntmachung des Hinweises auf die Patenterteilung: **05.04.2023**
(21) Anmeldenummer: 20201153.2
(22) Anmeldetag: 09.10.2020
(51) Int. Cl.: B60S 3/04, B08B 1/04, B08B 3/04, F16F 15/32, G01M 1/32

(54) **FELGENREINIGUNGSSTATION UND ZUGEHÖRIGES BETRIEBSVERFAHREN**
RIM CLEANING UNIT AND CORRESPONDING OPERATING METHOD
STATION DE NETTOYAGE DE JANTES ET PROCÉDÉ DE FONCTIONNEMENT ASSOCIÉ

(43) Veröffentlichungstag der Anmeldung: 13.04.2022
(73) Patentinhaber: Hofmann Maschinen- und Anlagenbau GmbH, 67550 Worms (DE)
(72) Erfinder: Nolandt, Andreas, 67549 Worms (DE); Aumann, Stephan, 67551 Worms (DE); Bork, Bernhard, 64579 Gernsheim (DE)
(74) Vertreter: Tergau & Walkenhorst Patentanwälte PartGmbB

(56) Entgegenhaltungen:
- DE-A1- 19 952 533
- DE-A1-102011 012 231
- DE-B4-102015 117 458
- US-B1- 7 325 268

## Beschreibung

Die Erfindung betrifft eine Felgenreinigungsstation und ein zugehöriges Betriebsverfahren.

Sogenannte Kompletträder von Kraftfahrzeugen umfassen jeweils eine Felge und einen Reifen. Zur Kompensation von Unwuchten, die den gleichmäßigen Radlauf negativ beeinflussen könnten, werden nach einer diesbezüglichen Vermessung üblicherweise ein oder mehrere Ausgleichsgewichte am Umfang der Felgeninnenfläche angebracht, in der Regel durch Kleben.

Um eine dauerhafte Befestigung des Ausgleichsgewichtes sicherzustellen, muss vor dessen Anbringung die Befestigungsfläche bzw. Klebefläche gereinigt werden. Schon geringe Mengen an Verunreinigungen - etwa in Form von Ölen, Fetten, Emulsionen, Seifmitteln, etc. - können die Haftbarkeit des Klebstoffs beeinträchtigen. Deshalb muss die Reinigung sorgfältig und zuverlässig erfolgen.

Die radiale Position der Anbringungsstelle an der Felge ist in der Regel vorab festgelegt. Typsicherweise gibt es zwei Möglichkeiten, nämlich eine innen, und eine außen. Die umfängliche Position hingegen ist möglicherweise zum Zeitpunkt der Reinigung noch nicht bekannt, so dass es erforderlich sein kann, den kompletten Umfang für zwei Reinigungsspuren zu reinigen.

Aus der DE 10 2015 117 458 B4 ist ein Verfahren (und eine Vorrichtung) zur Reinigung einer Befestigungsfläche für ein Ausgleichelement an einem Fahrzeugrad bekannt, wobei eine als Bürste ausgestaltete Reinigungsvorrichtung an einem Arm eines Industrieroboters befestigt ist. Die Bürste wird regelmäßig in ein Gefäß mit Reinigungsflüssigkeit eingetaucht und benetzt und dann zu der zu reinigenden Felge geführt. Dies ist relativ umständlich und bedingt einen hohen Verbrauch an Reinigungsflüssigkeit. Außerdem kann es zu einer Freisetzung (Emission) von umweltschädlicher Reinigungsflüssigkeit am Arbeitsplatz des Betriebspersonals kommen. US-B-7325268 offenbart den Oberbegriff des Anspruchs 1.

Der Erfindung liegt die Aufgabe zugrunde, eine Felgenreinigungsstation bereitzustellen, die eine zuverlässige und effiziente Felgenreinigung bei einem Komplettrad für das spätere Anbringen eines Ausgleichsgewichtes ermöglicht. Die Felgenreinigungsstation soll eine hohe Taktrate bei geringem Ressourcenverbrauch ermöglichen und wartungsfreundlich sein. Des Weiteren soll ein entsprechendes Verfahren zum Reinigen einer Felge angegeben werden.

In Bezug auf die Vorrichtung wird die Aufgabe erfindungsgemäß gelöst durch eine Felgenreinigungsstation mit den Merkmalen des Anspruchs 1. Das zugehörige Verfahren ist in Anspruch 10 definiert.

Demnach ist eine Felgenreinigungsstation vorgesehen mit
- einer Fördereinrichtung zum Ein- und Ausfördern eines Komplettrades mit einem Reifen und einer Felge,
- einer Zentrier- und Rotationseinrichtung zum Zentrieren und Drehen des Komplettrades, und
- einer Reinigungseinrichtung mit einem während eines Reinigungsvorganges in Kontakt mit der Felge bringbaren Reinigungskopf,
wobei die Reinigungseinrichtung eine Aufwickelrolle und eine Abwickelrolle für ein Reinigungsband, einen Rollen- und/oder Bandantrieb sowie Führungsmittel zur Führung des Reinigungsbandes um den Reinigungskopf aufweist.

Die Erfindung geht von der Überlegung aus, dass durch eine Trockenreinigung mit einem Reinigungstuch gute Resultate bei der Felgenreinigung erzielt werden können. Die Emissionsbelastung am Arbeitsplatz ist gering, und verbrauchte Reinigungstücher können zumindest teilweise recycelt werden. Allerdings sollte der Reinigungsvorgang, also das Reiben des Reinigungstuches an der Felge, für einen effizienten Arbeitsablauf weitgehend automatisiert werden, und der in Kontakt mit der Felge befindliche Bereich des Reinigungstuchs sollte regelmäßig gewechselt werden. Das heißt, ein mit aufgenommenem Schmutz gesättigter Tuchbereich sollte durch einen noch frischen, unverbrauchten Tuchbereich ersetzt werden. Dies gelingt am besten, indem das Reinigungstuch als längliches Band auf einer Abwickelrolle bereitgestellt wird, kontinuierlich oder getaktet vorangeschoben und an einem Reinigungskopf vorbeigeführt wird, der das Reinigungsband in Kontakt mit der zu reinigenden Stelle der Felge bringt, und schließlich der verbrauchte Bandabschnitt wieder auf einer Aufwickelrolle aufgewickelt wird - ähnlich dem Transport eines Films bei einem analogen Filmprojektor. Der Vorschub des Reinigungsbandes kann mittels eines Antriebs für eine oder für beide der Rollen und/oder mittels eines direkt am Band angreifenden Antriebs erfolgen. Bei den Führungsmitteln handelt es sich bevorzugt um Lauf- oder Umlenkrollen und/oder Gleitelemente.

In einer vorteilhaften Ausgestaltung sind die Aufwickelrolle, die Abwickelrolle und der Rollen- und/oder Bandantrieb in einem Reinigungsaggregat angeordnet, von dem ein Ausleger absteht, der den Reinigungskopf trägt. Dabei kann der Reinigungskopf sehr kompakt ausgeführt sein, so dass er selbst bei eingeschränkter Zugänglichkeit der zu reinigenden Felgenregion dort angreifen kann.

Vorteilhafterweise ist die Reinigungseinrichtung auf einer unterhalb der Fördereinrichtung angeordneten Halte- und Verstelleinrichtung montiert, wobei die Halte- und Verstelleinrichtung vorzugsweise eine Verschiebung der Reinigungsvorrichtung - und damit des Reinigungskopfes - in drei Raumrichtungen sowie bevorzugt ein Schwenken um zumindest eine Achse ermöglicht.

In zweckmäßiger Ausgestaltung weist die Fördereinrichtung einen Rollenförderer auf, welcher vorzugsweise ein Rollenfeld mit einer Aussparung zum Durchführen des Reinigungskopfes aufweist. Dies begünstigt die kompakte Installation der Halte- und Verstelleinrichtung und des Reinigungsaggregats unterhalb der Fördereinrichtung.

Vorteilhafterweise weist die Zentrier- und Rotationseinrichtung mindestens eine angetriebene Walze auf, die durch einen Verstellantrieb an die Lauffläche am Reifen des Komplettrades gedrückt werden kann, um dieses zu drehen. Besonders bevorzugt ist eine Kombination von zwei angetriebenen und zwei mitlaufenden Walzen, die an den Ecken eines den Reifen umschließenden Vierecks sitzen und durch geeignete Verstellung der Abstände das Komplettrad bedarfsweise einspannen und überdies das Komplettrad durch Übertragung der Bewegung von den angetriebenen Walzen bedarfsweise drehen.

Vorteilhafterweise weist der Rollenförderer zwei gegenläufig betreibbare Rollenfelder auf (eines auf der einen Seite der Aussparung für den Reinigungskopf und eines auf der anderen Seite), die entsprechend der gewünschten Drehrichtung die Drehung des Komplettrades zusätzlich unterstützen. Das heißt, für den Vorschub des Rades werden beide Rollenfelder gleichartig betrieben, zur Unterstützung der Raddrehung gegenläufig.

Bevorzugt weist der Reinigungskopf eine Reinigungsrolle zur Führung und zum Andrücken des Reinigungsbands an die Felge auf. Die Reinigungsrolle sitzt am Ende des bereits erwähnten Auslegers. Der Ausleger wird während der Reinigung mit einem Pneumatikzylinder an die Felge gedrückt. Der Ausleger ist schwimmend gelagert und gleicht Bewegungen in beide Richtungen aus und bringt permanent eine Vorlast auf die Reinigungsrolle. Dadurch wird auch bei kleinen Toleranzen in der Bewegung der Halte- und Verstelleinrichtung ein geeigneter Anpressdruck erzielt.

Das Reinigungsband besteht bevorzugt aus einem textilen Gewebe, insbesondere aus Mikrofaser, ggf. mit, bevorzugt jedoch ohne Stretchfaseranteil. Die Breite des Reinigungsbandes beträgt bevorzugt 25 mm.

In verfahrenstechnischer Sicht beinhaltet die Erfindung ein Verfahren zum Reinigen einer Felge bei einem Komplettrad mit der Felge und einem Reifen, bei dem in einer Felgenreinigungsstation der beschriebenen Art
- das Komplettrad mit Hilfe der Fördereinrichtung in eine Arbeitsposition gefördert und mit Hilfe der Zentrier- und Rotationseinrichtung zentriert wird,
- der Reinigungskopf mit Hilfe der Halte- und Verstelleinrichtung an die Felge gedrückt wird, und dann
- das Komplettrad bei feststehendem Reinigungskopf mit Hilfe der Zentrier- und Rotationseinrichtung um seine Radachse gedreht wird, so dass eine Reinigungsspur an der Felge in vollem 360°-Umfang oder in einem Teilabschnitt davon gereinigt wird.

Dabei werden vorteilhafterweise nacheinander zwei Reinigungsspuren an der Felge gereinigt, wobei zum Spurwechsel die Lage des Reinigungskopfes mit Hilfe der Halte- und Verstelleinrichtung geändert wird, und wobei vor, nach und/oder während der Reinigung das Reinigungsband durch den Rollen- und/oder Bandantrieb vorangeschoben wird.

Vorteilhafterweise wird die Reinigung mit trockenem Reinigungsband ohne Flüssigkeitsbenetzung durchgeführt.

Zur Erreichung einer Serviceposition wird die Reinigungseinrichtung durch die Halte- und Verstelleinrichtung vorteilhafterweise derart positioniert und gekippt, dass zumindest der Reinigungskopf, vorzugsweise auch das Reinigungsaggregat frei zugänglich ist. Bevorzugt wird dazu der Reinigungskopf nach unten gekippt und die Reinigungsvorrichtung seitlich aus dem Rahmen herausgefahren. Ersteres erfolgt bevorzugt automatisiert; letzteres kann ggf. manuell erfolgen.

Die Arbeitsabläufe während der Reinigung werden zweckmäßigerweise durch eine elektronische Anlagensteuerung vollautomatisch gesteuert. Das Überführen der Reinigungseinreichung in die Serviceposition kann wie oben erwähnt zumindest teilweise manuell erfolgen.

Besonders vorteilhaft ist es, dass das Komplettrad liegend durch die Felgenreinigungsstation gefördert und in ihr gereinigt wird. Das heißt, der Arbeitsaufwand, um das Rad in die Arbeitsposition zu bekommen, ist minimal.

Ein Ausführungsbeispiel der Erfindung, aus dem weitere Merkmale, Aufgaben und Vorteile hervorgehen, wird nachfolgend anhand der beigefügten Zeichnungen erläutert. Es zeigt:

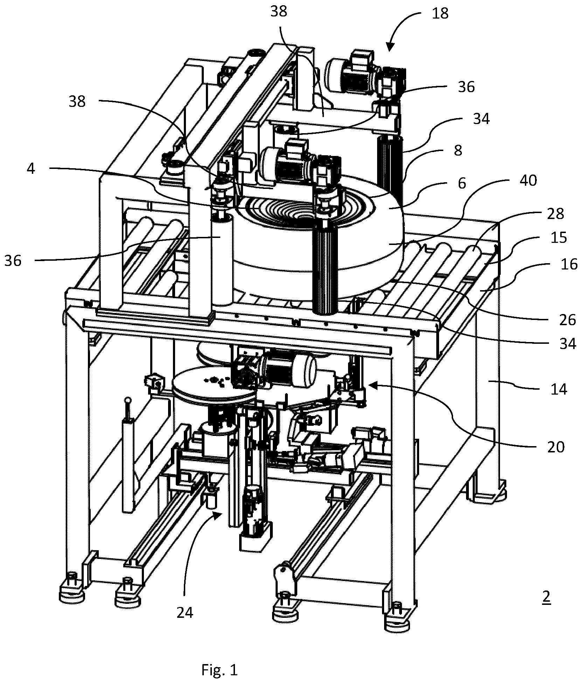

- FIG. 1: eine erfindungsgemäße Felgenreinigungsstation in perspektivischer Ansicht,
- FIG. 2 - 5: jeweils einen Längsschnitt durch die Felgenreinigungsstation, und zwar während unterschiedlicher Betriebszustände,
- FIG. 6: eine weitere perspektivische Ansicht der Felgenreinigungsstation, hier in einer Serviceposition,
- FIG. 7: eine zu FIG. 9 gehörige Draufsicht auf die Felgenreinigungsstation von oben,
- FIG. 8: ein Detail aus FIG. 3 mit einem Reinigungskopf in einer Vorposition, und
- FIG. 9: ein entsprechendes Detail mit einem Reinigungskopf in Arbeitsposition.

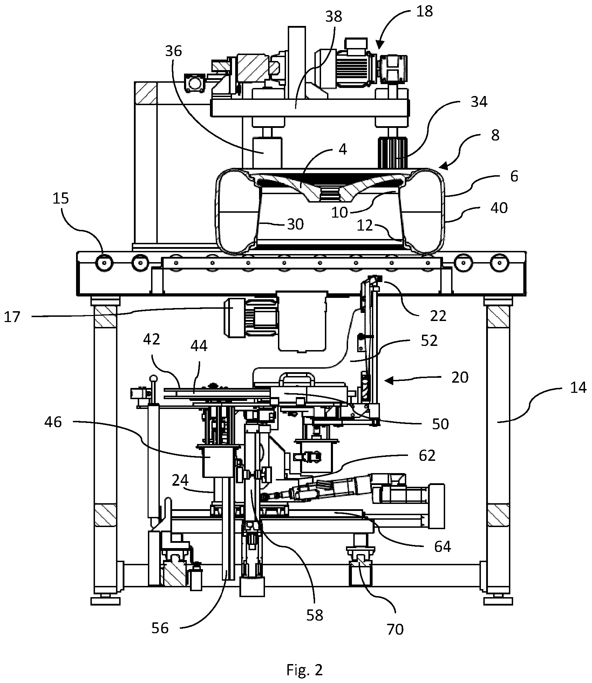

Die in den Figuren dargestellte Felgenreinigungsstation 2 dient zur Reinigung einer Felge 4 bei einem eine Felge 4 und einen Reifen 6 umfassenden Komplettrad 8 (Fahrzeugrad, kurz: Rad), und zwar in einem Bereich an der Innenseite der Felge 4, der für die anschließende Montage eines Ausgleichsgewichts (ein sogenanntes Wuchtgewicht) vorgesehen ist, insbesondere durch Kleben. Da während des Reinigungsvorgangs die spätere Anbringungs- bzw. Klebestelle möglicherweise bezüglich ihrer Umfangsposition noch nicht bekannt ist, kann es erforderlich sein, eine komplette umlaufende Reinigungsspur (mit 360° Umfang) an der Innenseite der Felge 4 zu reinigen. Üblicherweise betrifft dies zwei getrennte, in axialer Richtung der Felge 4 voneinander beabstandete Reinigungsspuren 10, 12 (siehe FIG. 2), welche die Gesamtheit möglicher Anbringungsstellen oder Befestigungsflächen für ein oder mehrere Ausgleichsgewichte umfassen. Falls die Anbringungsstelle bekannt oder hinsichtlich ihrer Winkellage eingrenzbar ist, kann es genügen, einen entsprechend reduzierten Umfangsbereich der jeweiligen Reinigungsspur 10, 12 zu reinigen.

Die Felgenreinigungsstation 2 umfasst einen auf dem Boden aufgestellten und befestigten Rahmen 14, an dem eine Fördereinrichtung 15, nämlich ein waagrecht ausgerichteter Rollenförderer 16 mit zugehörigem Antriebsmotor 17 für das zu reinigende Komplettrad 8 angeordnet ist. Eine Zentrier- und Rotationseinrichtung 18 für das Komplettrad 8 ist oberhalb des Rollenförderers 16 an dem Rahmen 14 befestigt. Die Zentrier- und Rotationseinrichtung 18 zentriert das liegend auf dem Rollenförderer 16 eingebrachte Komplettrad 8 und fixiert es während des Reinigungsvorgangs in seiner lateralen Lage. Zugleich kann die Zentrier- und Rotationseinrichtung 18 das zentrierte Komplettrad 16 um seine eigene Achse drehen. Unterhalb des Rollenförderers 16 ist eine Reinigungseinrichtung 20 mit einem in seiner Lage veränderbaren bzw. einstellbaren Reinigungskopf 22 an dem Rahmen 14 befestigt. Der Reinigungskopf 22 kann mittels einer Halte- und Verstelleinrichtung 24 von unten durch eine entsprechende Aussparung 26 im Rollenfeld 28 des Rollenförderers 16 in den vom Felgenmantel umgebenen Felgeninnenraum des zentrierten Komplettrads 8 eingreifen und dort die gewünschte Reinigung der Felgeninnenfläche 30 an der jeweiligen Reinigungsspur 10, 12 durchführen, wie weiter unten im Detail beschrieben wird. Dabei wird das Komplettrad 8 im Regelfall durch die Zentrier- und Rotationseinrichtung 18 um seine eigene, vertikal ausgerichtete Radachse 32 gedreht, während der Reinigungskopf 22 während der eigentlichen Reinigung bevorzugt im Raum feststeht und nur für einen Spurwechsel oder zum Erreichen der Ruheposition oder einer Serviceposition (siehe unten) bewegt wird.

Die Zentrier- und Rotationsvorrichtung 18 umfasst zwei Paare von Walzen 34, 36 mit vertikaler Drehachse, die jeweils an einem mittels entsprechender Antriebsaggregate gegenüber dem Rahmen 14 verstellbaren bzw. verfahrbaren Arm 38 angeordnet sind. Jeder der beiden Arme 38 trägt hier im Beispiel eine angetriebene Walze 34, deren Rotation sich bei Kontakt mit dem Reifen 6 auf das Komplettrad 8 überträgt, und eine passiv mitdrehende Walze 36. Insgesamt befinden sich die vier Walzen 34, 36 in Draufsicht gesehen an den Eckpunkten eines Rechtecks, außerhalb der Reifenumfangs. Während des Einförderns und Ausförderns des Komplettrades 8 in die bzw. aus der Arbeitsposition wird der Abstand zwischen den beiden parallelen Armen 38 so groß eingestellt, dass die Walzen 34, 36 den Reifen 6 nicht berühren oder jedenfalls den Radtransport nicht behindern. Zum Zentrieren und Drehen des Komplettrades 8 werden die beiden durch Schienen geführten Arme 38 durch einen Verstellantrieb unter Beibehaltung ihrer parallelen Ausrichtung zueinander soweit aufeinander zubewegt, dass die vier Walzen 34, 36 mit leichtem Anpressdruck an der Lauffläche 40 des Reifens 6 anliegen, wie weiter unten noch näher beschrieben wird (Außenzentrierung).

Die unterhalb des Rollenförderers 16 installierte Reinigungseinrichtung 20 umfasst ein als umlaufendendes Band ausgebildetes Reinigungstuch, welches auf einer Abwickelrolle 48 oder Spule bevorratet ist. Ähnlich wie ein Filmstreifen bei einem Filmprojektor kann das unbenutzte, saubere Reinigungsband 44 durch einen Rollen- und/oder Bandantrieb 46 von der Abwickelrolle 48 abgewickelt, am Reinigungskopf 22 vorbeigeführt und schließlich, in der Regel nach benutzungsbedingter Aufnahme von Schmutzpartikeln, auf einer Aufwickelrolle 42 oder Spule aufgewickelt werden. Durch entsprechende Ansteuerung des Rollen- und oder Bandantriebs 46 kann das Reinigungsband 44 schrittweise oder kontinuierlich voran geschoben werden, so dass stets ein sauberer Bandabschnitt am Reinigungskopf 22 zur Verfügung steht. Das Voranschieben des Reinigungsbandes 44 kann auch während des Felgenreinigung bei rotierendem Komplettrad 8 erfolgen.

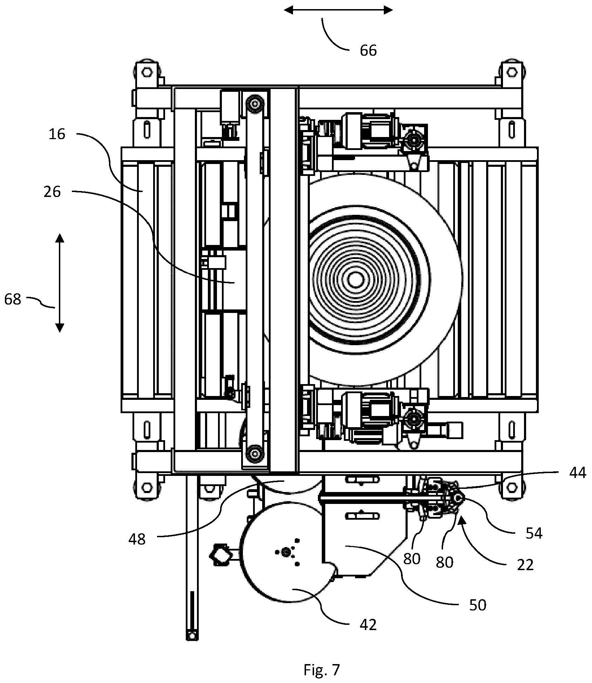

Die beiden Rollen 42, 48 und der Rollen- und/oder Bandantrieb 46 sind Bestandteil eines relativ sperrigen Reinigungsaggregats 50, von dem ein Ausleger 52 nach oben absteht, der den relativ kompakten Reinigungskopf 22 trägt. Das Reinigungsaggregat 50 und der Reinigungskopf 22 bilden zusammen die Reinigungseinrichtung 20. Durch diese räumliche Zweiteilung kann der Reinigungskopf 22 problemlos durch die Aussparung 26 im Rollenfeld 28 des Rollenförderers 16 in die Arbeitsposition gebracht werden. Hier im Beispiel liegen die beiden Rollen 42, 48 nebeneinander in einer im Wesentlichen horizontalen Ebene unterhalb des Reinigungskopfes 22, und das Reinigungsband 44 wird über ein System von Umlenkrollen 80 (zum Teil in FIG. 7 bis 9 sichtbar) an einer Reinigungsrolle 54 des Reinigungskopfes 22 vorbeigeführt. Die Reinigung der Felge 4 erfolgt durch die von der Reinigungsrolle 54 abgewandte Seite des Reinigungsbandes 44. Die Anordnung der Komponenten kann im Detail abweichen. Wesentlich ist, dass das Reinigungsband 44 gegen die zu reinigende Stelle der Felge 4 gedrückt und bei Bedarf voran geschoben werden kann.

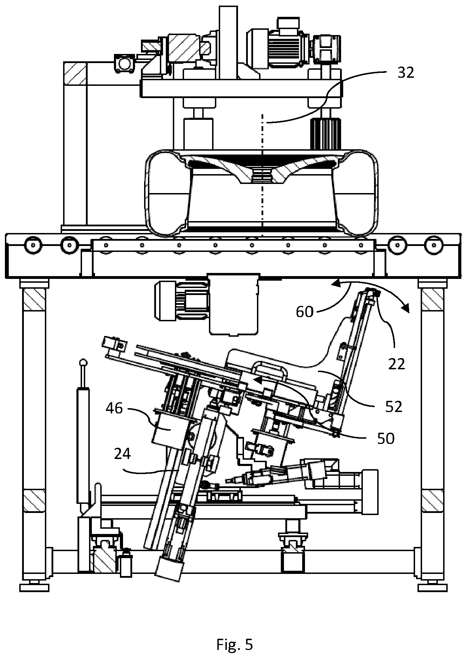

Zur Verstellung der Lage des Reinigungskopfes 22 ist die Reinigungseinrichtung 20 auf der Halte- und Verstelleinrichtung 24 mittels eines Hubzylinders 58 höhenverstellbar gelagert (Verstellantrieb). Hier im Beispiel handelt es sich um einen Elektrozylinder, der gegenüber einem Pneumatikzylinder den Vorteil hat, nicht nur die Endpositionen (Anschläge), sondern jede gewünschte Zwischenposition gezielt anfahren zu können. Der Fahrweg wird nämlich - je nach axialer Lage der Reinigungsspur 10, 12 - radtypabhängig vorgegeben. Alternativ ist auch ein Zahnstangenantrieb oder ein Spindelantrieb möglich. Eine parallel zu dem Hubzylinder 58 angeordnete Führungsschiene 56 verleiht der Anordnung als Linearführung mechanische Stabilität. Zudem sind der Hubzylinder 58 und die Führungsschiene 56 jeweils um eine horizontale Drehachse innerhalb einer senkrechten Ebene gegenüber der vertikalen Ausrichtung schwenkbar, so dass der Reinigungskopf 22 in der durch den Doppelpfeil gekennzeichneten Schwenkrichtung 60 (siehe FIG. 5) hin- und her schwenkbar ist. Die Hubbewegung und die Schwenkbewegung sind getrennt voneinander (unabhängig) steuerbar. Der Lagerträger 62, an dem der Hubzylinder 58 und die Führungsschiene 56 gelagert sind, ist entlang von Führungsschienen 64 mittels entsprechender Antriebsaggregate in Längsrichtung (X) 66 des Rollenförderers 16 hin- und her verfahrbar. In Querrichtung (Y) 68 des Rollenförderers 16 besteht ebenfalls eine Verstellmöglichkeit für den Lagerträger 62 mittels zugehöriger Führungsschienen 70 und ggf. mittels entsprechender Antriebsaggregate. Im Ergebnis ist die Reinigungseinrichtung 20 lateral (X, Y) und in der Höhe (Z) verstellbar und zusätzlich in Schwenkrichtung 60 schwenkbar bzw. kippbar.

Hier im Beispiel gibt es in Querrichtung (Y) kein Antriebsaggregat. Diese Bewegung wird manuell ausgeführt. In der Arbeitsposition, in der die Felge 4 gereinigt wird, ist die komplette Reinigungseinheit in Richtung der Führungsschiene 70 über eine Arretierung fixiert. Für die Reinigung ist ein Verfahren entlang dieser Achse nicht nötig. Nur zum Bandwechsel, wenn die Reinigungseinheit unter der Fördertechnik hervorgeholt werden muss, wird die Reinigungseinheit auf Führungsschiene 70 verschoben. Hierzu entriegelt ein Werker händisch die Einheit und zieht sie heraus.

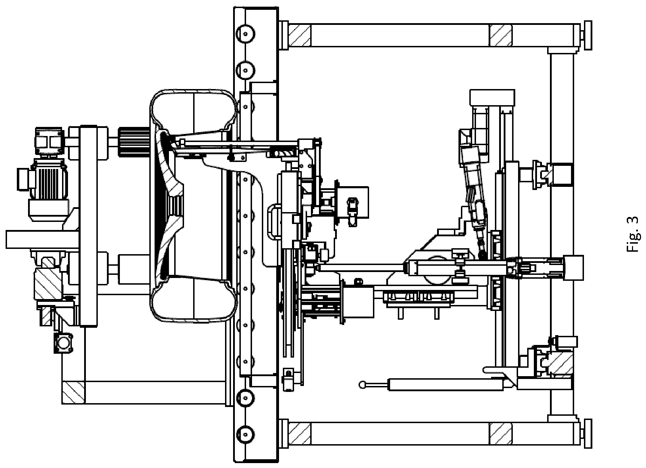

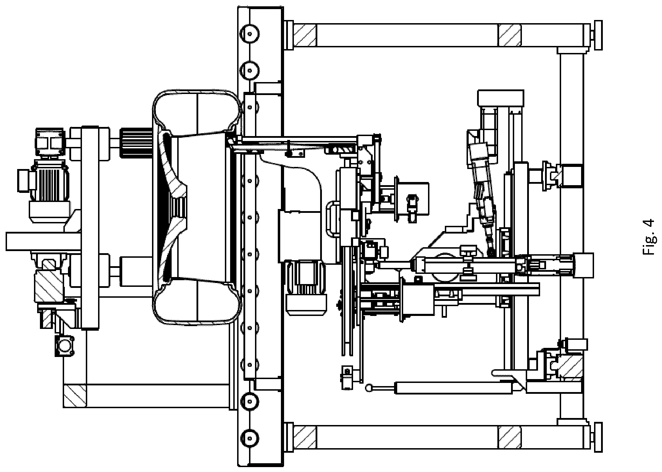

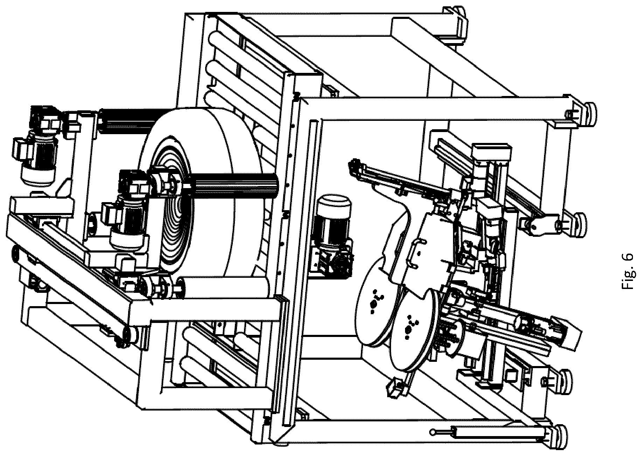

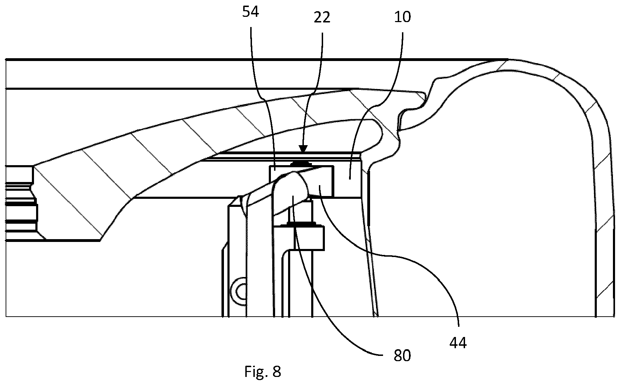

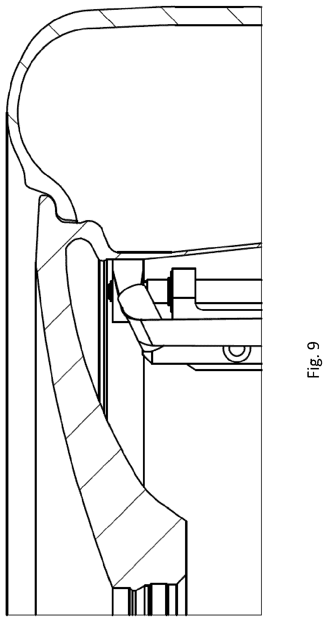

Durch die genannten Verstellmöglichkeiten, die die Halte- und Verstelleinrichtung 24 bereitstellt, kann der Reinigungskopf 22 nach dem Einfördern des Komplettrades 8 aus einer Ruheposition (FIG. 2) unterhalb des Rollenförderers 16 zunächst in eine der ersten (hier: oberen) Reinigungsspur 10 an der Felge 4 zugeordnete Vorposition (FIG. 3 mit Detail in FIG. 8) und von dort in eine Arbeitsposition (FIG. 9) bewegt werden, bei der das Reinigungsband 44 an der Felge 4 anliegt. In dieser Arbeitsposition dreht die Zentrier- und Rotationseinrichtung 18 das Komplettrad 8 um seine Radachse 32, so dass bedarfsweise die komplette Reinigungsspur 10 mit 360° Winkelumfang oder ein Ausschnitt davon gereinigt werden kann. Entsprechend kann anschließend der Reinigungskopf von der ersten Reinigungsspur 10 zur zweiten (hier: unteren) Reinigungsspur 12 umgeschwenkt (FIG. 4) und nach Beendigung des Reinigungsvorgangs in die Ruheposition zum Ausfördern des Komplettrades 8 (entsprechend FIG. 2) zurückgefahren werden. Weiterhin ist es möglich, den Reinigungskopf 22 vor Durchführung oder nach Beendigung eines Reinigungsvorgangs in eine gekippte und in Querrichtung 68 außerhalb des Rahmenquerschnitts liegende Serviceposition (FIG. 5, 6 und 7) unterhalb des Rollenförderers 16 zu fahren, in der er für Wartungsarbeiten besser zugänglich ist.

Der beschriebene Verstellmechanismus der Halte- und Verstelleinrichtung 24 ist vergleichsweise einfach aufgebaut und erledigt die notwendigen Verstellvorgänge schnell, zuverlässig und effizient. Stattdessen könnte aber auch ein handelsüblicher Industrieroboter bzw. Roboterarm mit Mehrachssteuerung zur Halterung und Verstellung der Reinigungseinrichtung 20 verwendet werden.

Nachfolgend werden die oben im Überblick vorgestellten Verfahrensschritte beim Betrieb der Felgenreinigungsstation 2 im Detail beschrieben:
- Ein Komplettrad 8 (luftbefüllt) wird über den Rollenförderer 16 in die Felgenreinigungsstation 2 eingefördert (FIG. 2).
- Das Komplettrad 8 wird im Zugriffsbereich der Zentrier- und Rotationseinrichtung 18 angehalten. Anschließend wird das Rad durch die Außenzentrierung zentriert. Hierzu fahren seitlich zwei angetriebene Walzen 34 und zwei mitlaufende Walzen 36 auf die Lauffläche 40 des Rades. Zeitgleich wird der Rollenförderer 16 gegenläufig angetrieben, um die Drehbewegung des Rades zu unterstützen. Durch die Drehbewegung und das Zusammenfahren der Walzen 34, 36 wird das Rad mittig über die Fördertechnik verschoben und zentriert.
- Sobald das Rad zentriert ist, kann der Reinigungskopf 22 in die Felge 4 verfahren werden. Hierfür wird die Aussparung 26 im Rollenförderer 16 genutzt. Eine Vorposition der zu reinigenden Reinigungsspur wird angefahren (noch ohne Kontakt, siehe FIG. 3 und 8). Die zu reinigenden Reinigungsspuren 10, 12 der Felge 4 sind jeweils die beiden Klebespuren, in denen nach der Reinigung das Ausgleichsgewicht geklebt wird.
- Nachfolgend wird die Reinigung der ersten Reinigungsspur 10 durchgeführt. Hierzu fährt der Reinigungskopf 22 mit dem Reinigungsband 44 auf Kontakt mit der Felge 4. Das Rad wird um die Radachse 32 gedreht, so dass die Klebespur der Felge auf vollem Umfang (360°) gereinigt wird (FIG. 9).
- Beim Reinigungsvorgang ist es möglich, das Reinigungsband 44 fest zu halten und somit den kompletten Reinigungszyklus mit einem möglichst geringen Bandverbrauch zu realisieren. Bei stark verschmutzten Felgen 4 kann allerdings auch je nach Bedarf das Reinigungsband 44 getaktet werden, so dass das Reinigungsband 44 relativ zur Felge 4 bewegt wird. Somit steht an der Kontaktfläche immer sauberes Tuch bzw. Band an und es kann mehr Schmutz aufgenommen werden.
- Nach Reinigung der ersten Reinigungsspur 10 findet ein Spurwechsel statt. Während des Spurwechsels kann ebenfalls das Reinigungsband 44 getaktet werden, so dass bei der neuen Reinigungsspur 12 auch ein sauberer Tuch- bzw. Bandabschnitt zur Verfügung steht (FIG. 4).
- Anschließend wird die zweite Reinigungsspur 12 nach gleichem Vorgehen wie die erste Reinigungsspur 10 auf vollem Umfang (360°) gereinigt.
- Ist die zweite Reinigungsspur 12 vollständig gereinigt, fährt der Reinigungskopf 22 nach unten aus der Fördertechnik (Rollenförderer 16) heraus, und das Rad wird ausgefördert (analog FIG. 2).
- Um die Reinigungseinrichtung 20 und speziell den Reinigungskopf 22 für den Bediener zugänglich zu machen - etwa für einen Wechsel des Reinigungsbandes 44, wenn es verbraucht ist - ist eine Serviceposition vorgesehen. Der Bediener ist dann in der Lage, die komplette Reinigungseinheit seitlich unterhalb der Fördertechnik herauszuziehen (FIG. 5 bis 7).

Die Maschine kann sowohl zur vollumfänglichen Reinigung beider Klebespuren genutzt werden (360°), als auch zur partiellen Reinigung. Wenn beispielsweise die Lage des Ausgleichsgewichtes vorab bekannt ist, braucht nur der entsprechende Bereich gereinigt werden. Entscheidend hierfür ist die Position der Felgenreinigungsstation 2 in der Gesamtanlage. Je nach Aufstellungsort in der Linie ist zum Zeitpunkt der Reinigung noch nicht bekannt, wo das Ausgleichsgewicht geklebt werden muss. Dann muss die Felge 4 auf vollem Umfang (360°) gereinigt werden. Sind der Winkel und die Länge des Ausgleichsgewichts allerdings schon bekannt, kann auch gezielt nur dieser Bereich gereinigt werden.

Eine der Felgenreinigungsstation 2 zugeordnete elektronische Anlagensteuerung, die in Hardware und/oder Software verwirklicht sein kann, steuert die Antriebsaggregate der Fördereinrichtung 15, der Zentrier- und Rotationseinrichtung 18, der Halte- und Verstelleinrichtung 24 und den Rollen- und/oder Bandantrieb 46 an. Manche Schritte erfolgen notwendigerweise sequentiell, etwa das Zentrieren des Komplettrades 8 nach dem Einfördern. Andere Schritte können zur Optimierung der Gesamttaktzeit vorteilhafterweise simultan oder zumindest teilweise zeitlich überlappend ausgeführt werden. Beispielweise kann noch während des Zentriervorgangs damit begonnen werden, den Reinigungskopf 22 in die Vorposition (FIG. 8) zu bringen. Analog kann gleichzeitig mit dem Spurwechsel des Reinigungskopfes 22 ein Vorschub des Reinigungsbandes 44 erfolgen. Schließlich kann noch während des Öffnens des durch die Walzen 34, 36 gebildeten Greifers der Reinigungskopf 22 von der Arbeitsposition in die Grundposition zurückgefahren werden. Auf diese Weise gelingt es, die Gesamttaktzeit der Felgenreinigungsstation bei der vollumfänglichen Reinigung von zwei Reinigungsspuren 10,12 auf 13 Sekunden oder weniger zu reduzieren.

### Bezugszeichenliste

- 2: Felgenreinigungsstation
- 4: Felge
- 6: Reifen
- 8: Komplettrad
- 10: Reinigungsspur
- 12: Reinigungsspur
- 14: Rahmen
- 15: Fördereinrichtung
- 16: Rollenförderer
- 17: Antriebsmotor
- 18: Zentrier- und Rotationseinrichtung
- 20: Reinigungseinrichtung
- 22: Reinigungskopf
- 24: Halte- und Verstelleinrichtung
- 26: Aussparung
- 28: Rollenfeld
- 30: Felgeninnenfläche
- 32: Radachse
- 34: Walze
- 36: Walze
- 38: Arm
- 40: Lauffläche
- 42: Aufwickelrolle
- 44: Reinigungsband
- 46: Rollen- und/oder Bandantrieb
- 48: Abwickelrolle
- 50: Reinigungsaggregat
- 52: Ausleger
- 54: Reinigungsrolle
- 56: Führungsschiene
- 58: Hubzylinder
- 60: Schwenkrichtung
- 62: Lagerträger
- 64: Führungsschiene
- 66: Längsrichtung
- 68: Querrichtung
- 70: Führungsschiene
- 80: Umlenkrolle

## Patentansprüche

1. Felgenreinigungsstation (2) mit
• einer Fördereinrichtung (15) zum Ein- und Ausfördern eines Komplettrades (8) mit einem Reifen (6) und einer Felge (4),
• einer Zentrier- und Rotationseinrichtung (18) zum Zentrieren und Drehen des Komplettrades (8), und
• einer Reinigungseinrichtung (20) mit einem während eines Reinigungsvorganges in Kontakt mit der Felge (4) bringbaren Reinigungskopf (22), **dadurch gekennzeichnet, daß** die Reinigungseinrichtung (20) eine Aufwickelrolle (42) und eine Abwickelrolle (48) für ein Reinigungsband (44), einen Rollen- und/oder Bandantrieb (46) sowie Führungsmittel zur Führung des Reinigungsbandes (44) um den Reinigungskopf (22) aufweist.

2. Felgenreinigungsstation (2) nach Anspruch 1, wobei die Aufwickelrolle (42), die Abwickelrolle (48) und der Rollen- und/oder Bandantrieb (46) in einem Reinigungsaggregat (50) angeordnet sind, von dem ein Ausleger (52) absteht, der den Reinigungskopf (22) trägt.

3. Felgenreinigungsstation (2) nach Anspruch 2, wobei der Reinigungskopf (22) eine Reinigungsrolle (54) zur Führung des Reinigungsbandes (44) aufweist, und wobei der Ausleger (52) pneumatisch belastbar ist, um das Reinigungsband (44) an die Felge (4) zu drücken.

4. Felgenreinigungsstation (2) nach einem der vorangehenden Ansprüche, wobei die Reinigungseinrichtung (20) auf einer unterhalb der Fördereinrichtung (15) angeordneten Halte- und Verstelleinrichtung (24) montiert ist.

5. Felgenreinigungsstation (2) nach Anspruch 4, wobei die Halte- und Verstelleinrichtung (24) eine Verschiebung der Reinigungsvorrichtung (20) in drei Raumrichtungen sowie ein Schwenken um zumindest eine Achse ermöglicht.

6. Felgenreinigungsstation (2) nach einem der vorangehenden Ansprüche, wobei die Fördereinrichtung (15) einen Rollenförderer (16) aufweist.

7. Felgenreinigungsstation (2) nach Anspruch 6, wobei der Rollenförderer (16) ein Rollenfeld (28) mit einer Aussparung (26) zum Durchführen des Reinigungskopfes (22) aufweist.

8. Felgenreinigungsstation (2) nach einem der vorangehenden Ansprüche wobei die Zentrier- und Rotationseinrichtung (18) mindestens eine angetriebene Walze (34) aufweist, die durch einen Verstellantrieb an die Lauffläche (40) des Komplettrades (8) gedrückt werden kann, um dieses zu drehen.

9. Felgenreinigungsstation (2) nach einem der vorangehenden Ansprüche, wobei das Reinigungsband (44) aus einem textilen Gewebe besteht.

10. Verfahren zum Reinigen einer Felge (4) bei einem Komplettrad (8) mit der Felge (4) und einem Reifen (6), bei dem in einer Felgenreinigungsstation (2) nach einem der vorangehenden Ansprüche
• das Komplettrad (8) mit Hilfe der Fördereinrichtung (15) in eine Arbeitsposition gefördert und mit Hilfe der Zentrier- und Rotationseinrichtung (18) zentriert wird,
• der Reinigungskopf (22) mit Hilfe der Halte- und Verstelleinrichtung (24) an die Felge (4) gedrückt wird, und dann
• das Komplettrad (8) bei feststehendem Reinigungskopf (22) mit Hilfe der Zentrier- und Rotationseinrichtung (18) um seine Radachse (32) gedreht wird, so dass eine Reinigungsspur (10, 12) an der Felge (4) in vollem 360°-Umfang oder in einem Teilabschnitt davon gereinigt wird.

11. Verfahren nach Anspruch 10, wobei nacheinander zwei Reinigungsspuren (10, 12) an der Felge (4) gereinigt werden, wobei zum Spurwechsel die Lage des Reinigungskopfes (22) mit Hilfe der Halte- und Verstelleinrichtung (24) geändert wird.

12. Verfahren nach Anspruch 10 oder 11 wobei vor, nach und/oder während der Reinigung das Reinigungsband (44) durch den Rollen- und/oder Bandantrieb (46) vorangeschoben wird.

13. Verfahren nach einem der Ansprüche 10 bis 12, wobei die Reinigung mit trockenem Reinigungsband (44) ohne Flüssigkeitsbenetzung durchgeführt wird.

14. Verfahren nach einem der Ansprüche 10 bis 13, wobei zur Erreichung einer Serviceposition die Reinigungseinrichtung (20) durch die Halte- und Verstelleinrichtung (24) derart positioniert wird, dass zumindest der Reinigungskopf (22) frei zugänglich ist.

15. Verfahren nach einem der Ansprüche 10 bis 14, wobei das Komplettrad (8) liegend gefördert und gereinigt wird.

## Claims

1. A rim cleaning station (2) with
• a conveyor (15) for infeeding and outfeeding a complete wheel (8) including a tire (6) and a rim (4),
• a centering and rotating device (18) for centering and rotating the complete wheel (8), and
• a cleaning device (20) with a cleaning head (22) which can be brought into contact with the rim (4) during a cleaning process,
**characterized in that**
the cleaning device (20) has a winding roller (42) and an unwinding roller (48) for a cleaning belt (44), a roller and/or belt drive (46) and guide means for guiding the cleaning belt (44) around the cleaning head (22) .

2. The rim cleaning station (2) according to claim 1, wherein the winding roller (42), the unwinding roller (48) and the roller and/or belt drive (46) are arranged in a cleaning unit (50) from which a cantilever (52) projects which carries the cleaning head (22).

3. The rim cleaning station (2) according to claim 2, wherein the cleaning head (22) has a cleaning roller (54) for guiding the cleaning belt (44), and wherein the cantilever (52) can be pneumatically loaded in order to press the cleaning belt (44) against the rim (4).

4. The rim cleaning station (2) according to one of the preceding claims, wherein the cleaning device (20) is mounted on a holding and adjusting device (24) arranged below the conveyor (15).

5. The rim cleaning station (2) according to claim 4, wherein the holding and adjusting device (24) enables displacing the cleaning device (20) in three spatial directions as well as pivoting about at least one axis.

6. The rim cleaning station (2) according to any one of the preceding claims, wherein the conveyor (15) comprises a roller conveyor (16).

7. The rim cleaning station (2) according to claim 6, wherein the roller conveyor (16) comprises a roller field (28) with a recess (26) for feeding through the cleaning head (22).

8. The rim cleaning station (2) according to any one of the preceding claims, wherein the centering and rotating device (18) comprises at least one driven roll (34) which can be pressed against the tread (40) of the complete wheel (8) by an adjusting drive in order to rotate the complete wheel.

9. The rim cleaning station (2) according to any one of the preceding claims, wherein the cleaning belt (44) consists of a textile fabric.

10. A method for cleaning a rim (4) of a complete wheel (8) including the rim (4) and a tire (6), wherein in a rim cleaning station (2) according to any one of the preceding claims
• the complete wheel (8) is conveyed into a working position by means of the conveyer (15) and is centered by means of the centering and rotating device (18),
• the cleaning head (22) is pressed against the rim (4) by means of the holding and adjusting device (24), and then
• the complete wheel (8) is rotated about its wheel axis (32) by means of the centering and rotating device (18) while the cleaning head (22) is stationary so that a cleaning track (10, 12) on the rim (4) is cleaned in the full 360° circumference or in a partial section thereof.

11. The method according to claim 10, wherein two cleaning tracks (10, 12) on the rim (4) are successively cleaned, wherein for changing the track, the position of the cleaning head (22) is changed by means of the holding and adjusting device (24).

12. The method according to claim 10 or 11, wherein before, after and/or during the cleaning, the cleaning belt (44) is moved forward by the roller and/or belt drive (46).

13. The method according to any one of claims 10 to 12, wherein the cleaning is performed with a dry cleaning belt (44) without liquid wetting.

14. The method according to any one of the claims 10 to 13, wherein, to reach a service position, the cleaning device (20) is positioned by the holding and adjusting device (24) in such a manner that at least the cleaning head (22) is freely accessible.

15. The method according to any one of claims 10 to 14, wherein the complete wheel (8) is conveyed and cleaned lying down.

## Revendications

1. Station de nettoyage de jantes (2) avec
• un système de transport (15) pour amener et emmener une roue complète (8) avec un pneu (6) et une jante (4),
• un dispositif de centrage et de rotation (18) pour centrer et tourner la roue complète (8) et
• un dispositif de nettoyage (20) avec une tête de nettoyage (22) pouvant être mise en contact avec la jante (4) pendant une opération de nettoyage, **caractérisée en ce que**
le dispositif de nettoyage (20) comporte un rouleau de déroulement (42) et un rouleau de déroulement (48) pour une bande de nettoyage (44), un entraînement de rouleaux et/ou de bande (46) ainsi que des moyens de guidage pour guider la bande de nettoyage (44) et la tête de nettoyage (22).

2. Station de nettoyage de jantes (2) selon la revendication 1, sachant que le rouleau de déroulement (42), le rouleau de déroulement (48) et l'entraînement de rouleaux et/ou de bande (46) sont disposés dans un ensemble de nettoyage (50) duquel ressort un bras (52), qui porte la tête de nettoyage (22).

3. Station de nettoyage de jantes (2) selon la revendication 2, sachant que la tête de nettoyage (22), comporte un rouleau de nettoyage (54) pour guider la bande de nettoyage (44) et sachant que le bras (52) peut être sollicité en charge de manière pneumatique pour appuyer la bande de nettoyage (44) à la jante (4).

4. Station de nettoyage de jantes (2) selon l'une quelconque des revendications précédentes, sachant que le dispositif de nettoyage (20) est monté sur un dispositif de maintien et de réglage (24) disposé en dessous du système de transport (15).

5. Station de nettoyage de jantes (2) selon la revendication 4, sachant que le dispositif de maintien et de réglage (24) permet un déplacement du dispositif de nettoyage (20) dans trois directions spatiales ainsi qu'un pivotement autour d'au moins un axe.

6. Station de nettoyage de jantes (2) selon l'une quelconque des revendications précédentes, sachant que le système de transport (15) comporte un convoyeur à rouleaux (16).

7. Station de nettoyage de jantes (2) selon la revendication 6, sachant que le convoyeur à rouleaux (16) comporte un champ de rouleau (28) avec un évidement (26) pour la mise en œuvre de la tête de nettoyage (22).

8. Station de nettoyage de jantes (2) selon l'une quelconque des revendications précédentes, sachant que le dispositif de centrage et de rotation (18) comporte au moins un cylindre (34), qui peut être appuyé à la surface de roulement (40) de la roue complète (8) pour faire tourner celle-ci.

9. Station de nettoyage de jantes (2) selon l'une quelconque des revendications précédentes, sachant que la bande de nettoyage (44) est composé d'un tissu textile.

10. Procédé de nettoyage d'une jante (4) pour une roue complète (8) avec la jante (4) et un pneu (6), pour lequel
• la roue complète (8) est transportée à l'aide du système de transport (15) dans une position de travail et est centrée à l'aide du dispositif de centrage et de rotation (18),
• la tête de nettoyage (22) est appuyée à la jante (4) à l'aide du dispositif de maintien et de réglage (24) et ensuite
• la roue complète (8) est tournée autour de son axe de roue (32) à l'aide du dispositif de centrage et de rotation (18) avec la tête de nettoyage (22)fixe de telle manière qu'une piste de nettoyage (10, 12) est nettoyée sur la jante (4) en périphérie complète à 360° ou dans une section partielle de celle-ci,
dans une station de nettoyage de jantes (2), selon l'une quelconque des revendications précédentes.

11. Procédé selon la revendication 10, sachant que deux pistes de nettoyage (10, 12) sont nettoyées l'une après l'autre sur la jante (4), sachant que pour le changement de piste, la position de la tête de nettoyage (22) est modifiée à l'aide du dispositif de maintien et de réglage (24).

12. Procédé selon la revendication 10 à 11, sachant qu'avant, après et/ou pendant le nettoyage, la bande de nettoyage (44) est remontée par l'entraînement à rouleau et/ou à bande (46).

13. Procédé selon l'une quelconque des revendications 10 à 12, sachant que le nettoyage est effectué avec une bande de nettoyage sèche (44) sans imprégnation de liquide.

14. Procédé selon l'une quelconque des revendications 10 à 13, sachant que pour atteindre une position de service, le système de nettoyage (20) est positionné par le dispositif de maintien et de réglage (24) de telle manière qu'au moins la tête de nettoyage (22) est librement accessible.

15. Procédé selon l'une quelconque des revendications 10 à 14, sachant que la roue complète (8) et transportée et nettoyée à plat.
